# EUROPÄISCHE PATENTSCHRIFT

(11) **EP 1 508 714 B1**
(45) Veröffentlichungstag und Bekanntmachung des Hinweises auf die Patenterteilung: **27.07.2011**
(21) Anmeldenummer: 04019116.5
(22) Anmeldetag: 12.08.2004
(51) Int. Cl.: F16D 13/38

(54) **Mehrscheiben-Reibungskupplung für ein Kraftfahrzeug**
Multi-disc friction clutch for a motor vehicle
Embrayage à friction à disques multiples pour un véhicule automobile

(30) Priorität: 21.08.2003 DE 10338361
(43) Veröffentlichungstag der Anmeldung: 23.02.2005
(73) Patentinhaber: ZF Friedrichshafen AG, 88046 Friedrichshafen (DE)
(72) Erfinder: Till, Ralf, 97502 Euerbach (DE)

(56) Entgegenhaltungen:
- DE-A- 1 755 032
- DE-A- 10 025 533
- US-A- 5 439 083
- US-A- 6 070 708

## Beschreibung

Die Erfindung betrifft eine Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens zwei Reibscheiben, wenigstens einer Zwischenscheibe, wenigstens einer Anpressscheibe und gewünschtenfalls einer Widerlagerscheibe; wobei die beiden Reibscheiben bzw. jeweils zwei Reibscheiben in Richtung der Drehachse durch eine Zwischenscheibe voneinander getrennt sind; und wobei die Reibscheiben und die wenigstens eine Zwischenscheibe, die einer Seite von Eingangsseite und Ausgangsseite zugeordnet sind, entgegen der elastischen Rückstellkraft einer zumindest zwischen der wenigstens einen Anpressscheibe und der Zwischenscheibe wirkenden Lüftfederanordnung einspannbar sind zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind.

Eine derartige Reibungskupplung ist beispielsweise aus der DE 100 25 533 A1 bekannt. Gemäß dieser Konstruktion umfassen Federelemente der Lüftfederanordnung in axialer Richtung zwischen benachbarten Scheiben sich erstreckende Schraubendruckfedern oder Schraubendruckfederabschnitte, die über einen Teilbereich ihrer axialen Erstreckung zumindest in radialer Richtung gegen Bewegung gehalten sind.

Aus der DE 199 04 136 A1 ist eine weitere Konstruktion der angesprochenen Art bekannt, bei der die Federelemente der Lüftfederanordnung jeweils wenigstens einen an einer zugeordneten der Scheiben angeordneten Basisabschnitt und jeweils wenigstens eine von dem Basisabschnitt vorstehende Federzunge aufweisen, wobei die Federzungen eine Betriebsstellung einnehmen, in der sie in axialer und bezogen auf den Radius der Drehung um die Drehachse in im Wesentlichen tangentialer Richtung von dem Basisabschnitt vorstehen.

Eine weitere Mehrscheiben-Reibungskupplung mit einer mehrere Scheiben in der Art von Lamellen aufweisenden Reibflächenanordnung ist aus der DE 195 45 972 A1 bekannt.

Die Lüftfederanordnung gemäß den Konstruktionen von DE 199 04 136 A1 und DE 100 25 533 A1 hat die Aufgabe, ein sicheres Ausrücken ohne wesentliche Schleppmomente zu gewährleisten, indem etwa die Zwischenscheibe (oder Zwischenscheiben) und die Anpressscheibe (oder Anpressscheiben) auseinander gedrückt werden und damit von der dazwischen angeordneten Reibscheibe abheben. Es wurde festgestellt, dass die bekannten Lösungen relativ starken Fliehkrafteinflüssen unterliegen und auch andere Nachteile haben. So sind gemäß DE 100 25 533 A1 die Federn etwa über der halben Länge in einer Bohrung geführt. Dies wirkt zwar einer Auslenkung der Feder nach radial außen infolge der Fliehkraft entgegen. Durch die Führung in der Bohrung werden die Federn aber bei hohen Drehzahlen infolge der auftretenden Reibung an einer freien Federbewegung gehindert. Die Reibung wirkt einer axialen Beweglichkeit der federnden Windungen entgegen, was im Extremfall dazu führen kann, dass die Federn in einem komprimierten Zustand gehalten werden.

Bezug nehmend auf das Ausführungsbeispiel der Fig. 2 und 3 von DE 199 04 136 A1 sind die U-förmigen Federelemente an einem nach radial außen weisenden Zahn der Zwischenscheibe diesen umgreifend gehalten.

Mangels sicherer Positionierung in einer definierten Soll-Stellung kann die Lage der Federzungen durch die Fliehkraft beeinflusst werden, was sich auf die Federeigenschaften auswirkt. Da alle Federzungen im gleichen Umlaufsinn tangential vorstehen, können in Folge des reibschlüssigen Eingriffs der Federzungenenden mit den benachbarten Anpressscheiben in tangentialer Richtung, also im Sinne eines Verdrehens der Zwischenscheibe und der Anpressscheiben relativ zueinander, wirkende Kräfte zwischen den Scheiben auftreten.

Es ist eine Aufgabe der vorliegenden Erfindung, eine Mehrscheiben-Reibungskupplung der angesprochenen Art bereitzustellen, die gegenüber dem Stand der Technik hinsichtlich wenigstens einem der angesprochenen Probleme verbessert ist.

Zur Lösung dieser Aufgabe wird bereitgestellt eine Mehrscheiben-Reibungskupplung, mit einer Eingangsseite, einer Ausgangsseite und wenigstens einer um eine Drehachse drehbaren Reibflächenanordnung zur Drehmomentübertragung zwischen der Eingangsseite und der Ausgangsseite; wobei die Reibflächenanordnung mehrere Scheiben aufweist, mit wenigstens zwei Reibscheiben, wenigstens einer Zwischenscheibe, wenigstens einer Anpressscheibe und gewünschtenfalls einer Widerlagerscheibe; wobei die beiden Reibscheiben bzw. jeweils zwei Reibscheiben in Richtung der Drehachse durch eine Zwischenscheibe voneinander getrennt sind; und wobei die Reibscheiben und die wenigstens eine Zwischenscheibe, die einer Seite von Eingangsseite und Ausgangsseite zugeordnet sind, entgegen der elastischen Rückstellkraft einer zumindest zwischen der wenigstens einen Anpresssscheibe und der Zwischenscheibe wirkenden Lüftfederanordnung einspannbar sind zwischen zwei in Richtung der Drehachse bewegbaren Anpressscheiben oder/und zwischen einer in Richtung der Drehachse verlagerbaren Anpressscheibe und der axial im Wesentlichen stationären Widerlagerscheibe, die der anderen Seite von Eingangsseite und Ausgangsseite zugeordnet sind; und wobei Federelemente der Lüftfederanordnung in axialer Richtung zwischen benachbarten Scheiben sich erstreckende Schraubendruckfedern oder Schraubendruckfederabschnitte umfassen, die über einen Teilbereich ihrer axialen Erstreckung zumindest in radialer Richtung gegen Bewegung gehalten sind.

Die von der Erfindung bereitgestellte Mehrscheiben-Reibungskupplung zeichnet sich erfindungsgemäß dadurch aus, dass die Schraubendruckfedern oder Schraubendruckfederabschnitte nur an einem oder - vorzugsweise - an beiden der axialen Endbereiche, in denen die Schraubendruckfederwindungen auf Block aneinander liegen oder/und nicht federn, gegen Bewegung gehalten sind.

Es wurde überraschend festgestellt, dass die Schraubendruckfedem bzw. Schraubendruckfederabschnitte auch dann noch hinreichend sicher gehalten sind, wenn sie nur am axialen Endbereich, nicht aber im Bereich der federnden Windungen gegen Bewegung gehalten sind. Dies gilt auch für den Fall, dass vergleichsweise große Drehzahlen auftreten und dementsprechend vergleichsweise große Fliehkräfte. Für sehr große Drehzahlen und damit Fliehkräfte wird es allerdings regelmäßig erforderlich sein, dass die Schraubendruckfedern bzw. Schraubendruckfederabschnitte an beiden axialen Endbereichen gegen Bewegung gehalten sind.

Die erfindungsgemäße Lösung, speziell in ihrer Ausbildung, dass beide axiale Endbereiche gegen Bewegung gehalten sind, ermöglicht eine definierte Positionierung der Federn und eine zuverlässige Sicherung der Federn gegen Verkippen nach radial außen. So können etwa Bohrungen für die axialen Endbereiche ohne wesentliches Bewegungsspiel in radialer oder Umfangsrichtung für die Federn ausgeführt sein. Eine Sicherung der Federn gegen ein Verkippen nach radial außen ist insoweit wichtig, als dass ein solches Verkippen dazu führen könnte, dass die Zwischenplatte und die Anpressplatte nicht korrekt abheben und dass damit die Kupplung schlecht trennt. Dies wurde bei Vorversuchen auf Grundlage der Konstruktion gemäß DE 100 25 533-A1 mit vergrößerten Bohrungen als Gefahr erkannt.

Es wurde indirekt schon eine bevorzugte Ausgestaltungsmöglichkeit angesprochen, nämlich dass die Schraubendruckfedern oder Schraubendruckfederabschnitte nur an einem oder - vorzugsweise - an beiden axialen Endbereichen in radialer sowie in Umfangsrichtung gegen Bewegung gehalten sind.

Allgemein wird daran gedacht, dass auf Block liegende oder/und nicht federnde Endwindungen einer jeweiligen Schraubendruckfeder bzw. eines jeweiligen Schraubendruckfederabschnitts in eine vorzugsweise als Bohrung ausgeführte Führungsvertiefung einer zugeordneten der Scheiben eingreifen. Dabei kann wenigstens eine der Führungsvertiefungen mit einer in radialer Richtung oder/und in Umfangsrichtung wirksamen Einführphase ausgeführt sein, um die Montage zu erleichtern.

Vorzugsweise kann eines der Federelemente an wenigstens einer der Scheiben axial festgelegt sein.

Eine besonders hohe Betriebssicherheit wird dann erreicht, wenn alle Federelemente an ihren beiden Enden an der jeweiligen Scheibe axial festgelegt sind. Man kann speziell vorsehen, dass die Endwindung bzw. Endwindungen innerhalb der zugeordneten Führungsvertiefung axial gehalten sind/ist.

Das Federelement kann an der betreffenden Scheibe beispielsweise formschlüssig oder stoffschlüssig befestigt sein. Es wird vor allem daran gedacht, dass das Federelement an der betreffenden Scheibe festgenietet ist.

Wenigstens eine der Scheiben kann auf beiden axialen Seiten mit Federelementen bestückt sein. Von den Scheiben kann zumindest eine Zwischenscheibe mit Federelementen bestückt sein. Es wird vor allem daran gedacht, dass radial vorstehende Drehmitnahmevorsprünge der jeweiligen Scheibe mit Federelementen bestückt sind.

In der Regel werden die Schraubendruckfedern bzw. Schraubendruckfederabschnitte gegenüber einem Außenradius der Reibscheiben radial weiter außen angeordnet sein.

Es kommt durchaus in Betracht, die Reibungskupplung als nasslaufende Kupplung, beispielsweise nasslaufende Lamellenkupplung, ausgeführt ist. Demgegenüber wird aber vor allem daran gedacht, dass die Reibungskupplung als trockenlaufende Kupplung ausgeführt ist. In der Regel werden die Reibscheiben mit Reibbelägen ausgeführt sein.

Die Erfindung betrifft ferner ein Kraftfahrzeug-Antriebsstrang mit einer erfindungsgemäßen Mehrscheiben-Reibungskupplung zwischen einer Antriebseinheit und einem Getriebe.

Die Erfindung wird im Folgenden anhand eines in der einzigen Figur gezeigten Ausführungsbeispiels näher erläutert.

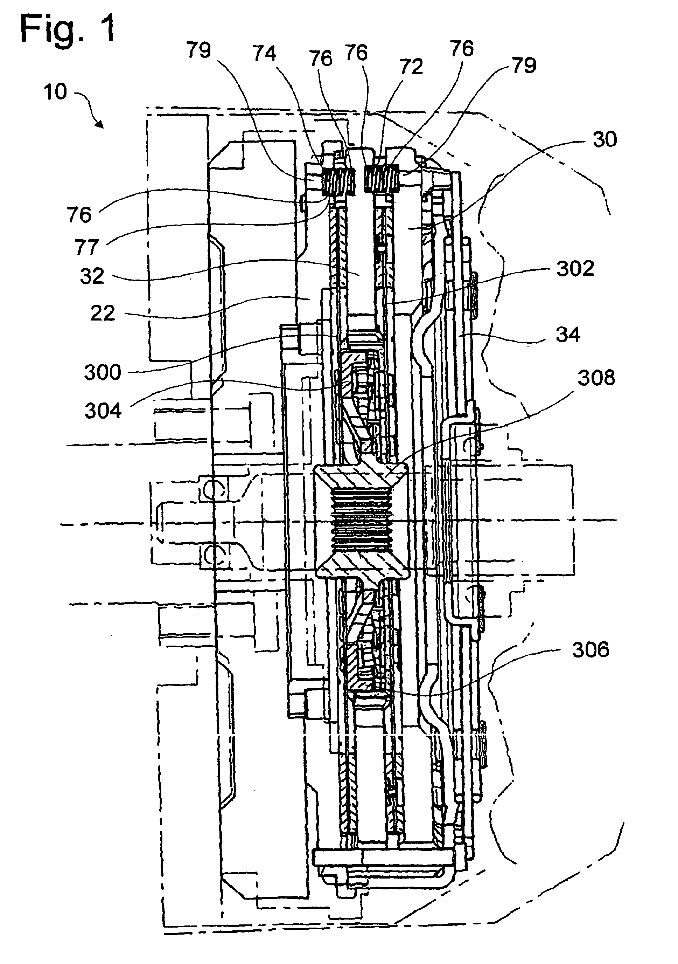

- Fig. 1: ist eine Längsschnittansicht eines Beispiels einer erfindungsgemäßen Mehrscheiben-Reibungskuppfung.

Es wird auf DE 100 25 533 A1 Bezug genommen, die verschiedene Beispiele von Mehrscheiben-Reibungskupplungen zeigt, die als Ausführungspunkt der Erfindung angesehen werden können. Es wird speziell auf Fig. 21, 50, 52 und 54 in Verbindung mit der sonstigen Offenbarung von DE 100 25 533 A1 verwiesen.

Wie die Konstruktionen aus DE 100 25 533 A1 weist die Mehrscheiben-Reibungskupplung ein topfartig ausgebildetes Kupplungsgehäuse auf, das in Fig. 1 allerdings nicht im Detail gezeigt ist. Das Kupplungsgehäuse ist beispielsweise mit einem eine Widerlageranordnung bildenden Schwungrad 22 durch Nieten oder Schraubbolzen fest verbunden. Das Schwungrad 22 kann selbst an einem primären Schwungrad oder an der Ausgangsseite eines Zwei-Massen-Schwungrads angebracht sein, wie in Fig. 1 angedeutet, und ist insoweit bezogen auf Fig. 1 als sekundäres Schwungrad 22 zu bezeichnen.

Im Gehäuse, d. h. zwischen einem Bodenbereich des Gehäuses und dem sekundären Schwungrad 22 liegt eine allgemein mit 30 bezeichnete Anpressplatte (Anpressscheibe) oder eine allgemein mit 32 bezeichnete Zwischenplatte (Zwischenscheibe). Die Anpressplatte 30 wird durch einen als Membranfeder ausgebildeten Kraftspeicher 34 derart beaufschlagt, dass sie in Richtung auf das Schwungrad 22 zu gepresst ist. Zwischen der Anpressplatte 30 und der Zwischenplatte 32 einerseits und zwischen der Zwischenplatte 32 und dem Schwungrad 22 andererseits liegen jeweilige Kupplungsscheiben oder Reibbelageinheiten einer oder mehrerer Kupplungsscheiben, so dass bei Beaufschlagung der Anpressplatte 30 durch den Kraftspeicher 34 ein Kupplungsscheibenbereich zwischen der Anpressplatte 30 und der Zwischenplatte 32 geklemmt wird und ein weiterer Kupplungsscheibenbereich zwischen der Zwischenplatte 32 und dem Schwungrad 22 geklemmt wird.

In Fig. 1 sind zwei Kupplungsscheiben 300 und 302 erkennbar, die mit ihren jeweiligen Reibbelägen zwischen dem Schwungrad 22 und der Zwischenplatte 32 bzw. der Zwischenplatte 32 und der Anpressplatte 30 liegen. Die Reibbeläge der Kupplungsscheiben 300, 302 sind beispielsweise über eine Belagfederung an jeweiligen ringartig ausgebildeten und miteinander in Umfangsmitnahmeangriff stehenden Trägerelementen 304, 306 getragen, wobei die Umfangsmitnahmeverbindung beispielsweise über eine sich axial erstreckende Verzahnung gebildet ist, so dass die beiden Trägerelemente 304, 306 sich axial bezüglich einander verlagern können. Das Trägerelement 304 kann ferner mit einem Nabenbereich 308 verbunden sein, der zur drehfesten Kopplung der beiden Kupplungsscheiben 300, 302 mit einer Abtriebswelle, beispielsweise einer Getriebeeingangswelle, vorgesehen ist. Die Kupplungsscheiben bzw. genauer der Nabenbereich 308 bilden also die Ausgangsseite der Reibungskupplung, während deren Eingangsseite von dem motorseitig angekoppelten Kupplungsgehäuse und den damit drehfest verbundenen Komponenten 22, 32 und 30, also dem sekundären Schwungrad 22, der Zwischenplatte 32 und der Anpressplatte 30, gebildet ist. Die drehfeste Kopplung zwischen dem Gehäuse und den genannten Komponenten kann entsprechend den Konstruktionsprinzipien gemäß DE 10025 533 A1 erzielt sein, also durch eine Mitnahmeverzahnung. Hierzu können die Platten oder Scheiben 22, 32 und 30 radial vorstehende Zahnabschnitte aufweisen, die in komplementär ausgestaltete Ausnehmungen des Gehäuses eingreifen. Es wird insbesondere auf Fig. 5 von DE 100 25 533 A1 verwiesen.

Zu weiteren Einzelheiten und Ausgestaltungsmöglichkeiten der Reibungskupplung 10 wird auf die DE 100 25 533 A1 verwiesen, wobei darauf hingewiesen wird, dass die Bezugszeichen der Fig. 1 den in DE 100 25 533 A1 verwendeten Bezugszeichen entsprechen.

Wie gemäß DE 100 25 533 A1 weist die Kupplung 10 eine Lüftfederanordnung auf, die von zwischen dem Sekundärschwungrad 22 und der Zwischenplatte 32 wirksamen Schraubendruckfedem 74 und von zwischen der Zwischenplatte 32 und der Anpressplatte 30 wirksamen Schraubendruckfedern 72 gebildet ist. Vorzugsweise weist jeder der Federsätze 72 und 74 gleich viele Federn 72 bzw. 74 auf. Die Federn sorgen dafür, dass bei Durchführung einer Ausrückbewegung die Zwischenplatte 32 immer mittig zwischen der Anpressplatte 30 und dem Schwungrad 22 gehalten wird. Es erfolgt somit vorzugsweise für jeden der zwischen der Anpressplatte 30 und der Zwischenplatte 32 einerseits und der Zwischenplatte 30 und dem Schwungrad 22 andererseits positionierten Kupplungsscheibenbereiche ein gleicher Ausrückhub.

Die Zwischenplatte 32 weist auf beiden axialen Seiten Vertiefungen 76 auf, in die die Federn 72 bzw. 74 mit ihren nicht federnden (auf Block liegenden) Endwindungsbereich eingreifen. Die Vertiefungen 76 dienen also als Federsitze, die die Federn 72 und 74 sowohl in Umfangsrichtung als auch in radialer Richtung gegen Bewegung halten.

In entsprechender Weise weisen das Schwungrad 22 und die Anpressplatte 30 als Federsitze dienende Vertiefungen 76 in ihren der Zwischenplatte 32 zugewandten axialen Seiten auf, in die die Federn 72 und 74 mit ihrem jeweils anderen nicht federnden (auf Block liegenden) Endwindungsbereich eingreifen. Damit sind die Federn an beiden axialen Enden in radialer Richtung und in Umfangsrichtung gegen Bewegung gehalten.

Die Vertiefungen 76 sind in Bezug auf die Druckfedern 72, 74 derart ausgelegt, dass nur die nicht federnden End-Windungen geführt sind und die federnden Windungen frei stehen. Jede Feder kann damit ihre Kraft reibungsarm bzw. reibungsfrei bei allen Drehzahlen entfalten. Die Tiefe der Bohrung richtet sich nach der Dicke des verwendeten Federdrahts. Zweckmäßig ist beispielsweise eine Tiefe entsprechend dem 1,5-fachen der Federdrahtdicke, beispielsweise also rund-2 mm.

Es hat sich überraschenderweise gezeigt, dass die beidseitige Halterung der Federn mittels der nur die nicht federnden Endwindungsbereich haltenden Vertiefungen auch bei großen Drehzahlen und dementsprechend großen Fliehkräften ausreicht, um eine korrekte Funktionsweise der Lüftfederanordnung zu gewährleisten. Die Zwischenplatte und die Anpressplatte heben also stets korrekt ab und die Kupplung trennt demgemäß stets ordnungsgemäß.

Zur Erleichterung der Montage können alle oder einige der Vertiefungen mit einer Fase 77 ausgeführt sein. Mindestens eine der Federn kann axial positionsfixiert sein, beispielsweise mittels eines Niets gehalten sein.

Beispielsweise können aus fertigungstechnischen Gründen vorgesehene, sich an die Vertiefungen 76 anschließende Bohrungen 79 im sekundären Schwungrad 22 bzw. in der Anpressplatte 30 zum Festnieten der jeweiligen Schraubendruckfedern 74 bzw. 72 genutzt werden.

## Patentansprüche

1. Mehrscheiben-Reibungskupplung, mit einer Eingangsseite; einer Ausgangsseite (308) und wenigstens einer um eine Drehachse drehbaren Reibflächenanordnung (22, 300, 32, 302, 30) zur Drehmomentübertragung zwischen der Eingangsseite und der Ausgangsseite;
wobei die Reibflächenanordnung mehrere Scheiben (22, 300, 32, 302, 30) aufweist, mit wenigstens zwei Reibscheiben (300, 302), wenigstens einer Zwischenscheibe (32), wenigstens einer Anpressscheibe (30) und gewünschtenfalls einer Widerlagerscheibe (22);
wobei die beiden Reibscheiben (300, 302) bzw. jeweils zwei Reibscheiben in Richtung der Drehachse durch eine Zwischenscheibe (32) voneinander getrennt sind;
und wobei die Reibscheiben (300, 302) und die wenigstens eine Zwischenscheibe (32), die einer Seite von Eingangsseite und Ausgangsseite zugeordnet sind, entgegen der elastischen Rückstellkraft einer zumindest zwischen der wenigstens einen Anpressscheibe und der Zwischenscheibe wirkenden Lüftfederanordnung einspannbar sind zwischen zwei in Richtung der Drehachse bewegbaren Anpressscheiben oder/und zwischen einer in Richtung der Drehachse verlagerbaren Anpressscheibe (30) und der axial im Wesentlichen stationären Widerlagerscheibe (22), die der anderen Seite von Eingangsseite und Ausgangsseite zugeordnet sind; und wobei Federelemente (72, 74) der Lüftfederanordnung in axialer Richtung zwischen benachbarten Scheiben sich erstreckende Schraubendruckfedern (72, 74) oder Schraubendruckfederabschnitte umfassen, die über einen Teilbereich ihrer axialen Erstreckung zumindest in radialer Richtung gegen Bewegung gehalten sind; **dadurch gekennzeichnet,**
**dass** die Schraubendruckfedern (72, 74) oder Schraubendruckfederabschnitte nur an einem öder - vorzugsweise - an beiden der axialen Endbereiche, in denen die Schraubendruckfederwindungen auf Block aneinander liegen oder/und nicht federn, gegen Bewegung gehalten sind.

2. Mehrscheiben-Reibungskupplung nach Anspruch 1, **dadurch gekennzeichnet, dass** die Schraubendruckfedern (72, 74) oder Schraubendruckfederabschnitte nur an einem oder - vorzugsweise - an beiden axialen Endbereichen in radialer Richtung sowie in Umfangsrichtung gegen Bewegung gehalten sind.

3. Mehrscheiben-Reibungskupplung nach Anspruch 1 oder 2, **dadurch gekennzeichnet, dass** auf Block liegende oder/und nicht federnde Endwindungen einer jeweiligen Schraubendruckfeder (72; 74) bzw. eines jeweiligen Schraubendruckfederabschnitts in eine vorzugsweise als Bohrung (76) ausgeführte Führungsvertiefung (76) einer zugeordneten der Scheiben eingreifen.

4. Mehrscheiben-Reibungskupplung nach Anspruch 3, **dadurch gekennzeichnet, dass** wenigstens eine der Führungsvertiefungen (76) mit einer in radialer Richtung oder/und in Umfangsrichtung wirksamen Einführfase (77) ausgeführt ist.

5. Mehrscheiben-Reibungskupplung nach einem der Ansprüche 1 bis 4, **dadurch gekennzeichnet, dass** wenigstens eines der Federelemente (72, 74) an wenigstens einer der Scheiben axial festgelegt ist.

6. Mehrscheiben-Reibungskupplung nach Anspruch 5 in Rückbeziehung zumindest auf Anspruch 3, **dadurch gekennzeichnet, dass** die Endwindungen innerhalb der zugeordneten Führungsvertiefung (76) axial gehalten sind.

7. Mehrscheiben-Reibungskupplung nach Anspruch 5 oder 6, **dadurch gekennzeichnet, dass** das Federelement (72, 74) an der betreffenden Scheibe (22; 30) formschlüssig oder stoffschlüssig an Platte befestigt ist.

8. Mehrscheiben-Reibungskupplung nach einem der Ansprüche 5 bis 7, **dadurch gekennzeichnet, dass** das Federelement (72, 74) an der betreffenden Scheibe (22; 30) festgenietet ist.

9. Mehrscheiben-Reibungskupplung nach einem der Anspüche 1 bis 8, **dadurch gekennzeichnet, dass** wenigstens eine (32) der Scheiben auf beiden axialen Seiten mit Federelementen (72, 74) bestückt ist.

10. Mehrscheiben-Reibungkupplung nach einem der Ansprüche 1 bis 9, dass von den Scheiben zumindest eine Zwischenscheibe (32) mit Federelementen (72, 74) bestückt ist.

11. Mehrscheiben-Reibungskupplung nach einem der Ansprüche 1 bis 10, **dadurch gekennzeichnet, dass** radial vorstehende Drehmitnahmevorsprünge der jeweiligen Scheibe mit Federelementen bestückt sind.

12. Mehrscheiben-Reibungskuppkung nach einem der Ansprüche 1 bis 11, **dadurch gekennzeichnet, dass** die Schraubendruckfedern (72, 74) bzw. Schraubendrucktederabschnitte gegenüber einem Außenradius der Reibscheiben (300, 302) radial weiter außen angeordnet sind.

13. Mehrscheiben-Reibungskupplung nach einem der Ansprüche 1 bis 12, **dadurch gekennzeichnet, dass** sie als trockenlaufende Kupplung ausgeführt ist oder/und dass die Reibscheiben Reibbeläge aufweisen.

14. Kraftfahrzeug-Antriebsstrang mit einer Mehrscheiben-Reibungskupplung nach einem der Ansprüche 1 bis 13 (10) zwischen einer Antriebseinheit und einem Getriebe.

## Claims

1. Multiple-plate friction clutch, having an input side, an output side (308) and at least one friction-face arrangement (22, 300, 32, 302, 30) which can be rotated about a rotational axis for transmitting torque between the input side and the output side; the friction-face arrangement having a plurality of plates (22, 300, 32, 302, 30), having at least two friction plates (300, 302), at least one intermediate plate (32), at least one pressing plate (30) and optionally one abutment plate (22); the two friction plates (300, 302) or in each case two friction plates being separated from one another in the direction of the rotational axis by an intermediate plate (32); and it being possible for the friction plates (300, 302) and the at least one intermediate plate (32) which are assigned to one side of input side and output side to be clamped in counter to the elastic restoring force of a pneumatic-spring arrangement which acts at least between the at least one pressing plate and the intermediate plate, between two pressing plates which can be moved in the direction of the rotational axis and/or between a pressing plate (30) which can be displaced in the direction of the rotational axis and the axially substantially stationary abutment plate (22) which are assigned to the other side of input side and output side; and spring elements (72, 74) of the pneumatic-spring arrangement comprising helical compression springs (72, 74) or helical compression spring sections which extend in the axial direction between adjacent plates and are held against movement at least in the radial direction over a part region of their axial extent; **characterized in that** the helical compression springs (72, 74) or helical compression spring sections are held against movement only at one axial end region or preferably at both of the axial end regions, in which the helical compression spring windings lie against one another in a block and/or are not resilient.

2. Multiple-plate friction clutch according to Claim 1, **characterized in that** the helical compression springs (72, 74) or helical compression spring sections are held against movement in the radial direction and in the circumferential direction only at one axial end region or preferably at both axial end regions.

3. Multiple-plate friction clutch according to Claim 1 or 2, **characterized in that** end windings of a respective helical compression spring (72; 74) or of a respective helical compression spring section which lie in a block and/or are not resilient engage into a guide depression (76) of an associated one of the plates, which guide depression (76) is preferably configured as a hole (76).

4. Multiple-plate friction clutch according to Claim 3, **characterized in that** at least one of the guide depressions (76) is configured with an insertion bevel (77) which acts in the radial direction and/or in the circumferential direction.

5. Multiple-plate friction clutch according to one of Claims 1 to 4, **characterized in that** at least one of the spring elements (72, 74) is fixed axially on at least one of the plates.

6. Multiple-plate friction clutch according to Claim 5, with a back-reference at least to Claim 3, **characterized in that** the end windings are held axially within the associated guide depression (76).

7. Multiple-plate friction clutch according to Claim 5 or 6, **characterized in that** the spring element (72, 74) is fastened to the relevant plate (22; 30) in a positively locking or material-to-material manner on the plate.

8. Multiple-plate friction clutch according to one of Claims 5 to 7, **characterized in that** the spring element (72, 74) is riveted fixedly to the relevant plate (22; 30).

9. Multiple-plate friction clutch according to one of Claims 1 to 8, **characterized in that** at least one (32) of the plates is fitted with spring elements (72, 74) on both axial sides.

10. Multiple-plate friction clutch according to one of Claims 1 to 9, **characterized in that** at least one intermediate plate (32) of the plates is fitted with spring elements (72, 74).

11. Multiple-plate friction clutch according to one of Claims 1 to 10, **characterized in that** radially protruding rotary driving projections of the respective plate are fitted with spring elements.

12. Multiple-plate friction clutch according to one of Claims 1 to 11, **characterized in that** the helical compression springs (72, 74) or helical compression spring sections are arranged radially further to the outside than an external radius of the friction plates (300, 302).

13. Multiple-plate friction clutch according to one of Claims 1 to 12, **characterized in that** it is configured as a dry-running clutch, and/or **in that** the friction plates have friction linings.

14. Motor-vehicle drive train having a multiple-plate friction clutch (10) according to one of Claims 1 to 13 between a drive unit and a gearbox.

## Revendications

1. Embrayage à friction à disques multiples, comprenant un côté d'entrée, un côté de sortie (308), et au moins un agencement de surfaces de friction (22, 300, 32, 302, 30) pouvant tourner autour d'un axe de rotation, pour le transfert de couple entre le côté d'entrée et le côté de sortie ;
l'agencement de surfaces de friction présentant plusieurs disques (22, 300, 32, 302, 30) avec au moins deux disques de friction (300, 302), au moins un disque intermédiaire (32), au moins un disque de pression (30) et éventuellement un disque de butée (22) ; les deux disques de friction (300, 302) ou à chaque fois deux disques de friction étant séparés l'un de l'autre dans la direction de l'axe de rotation par un disque intermédiaire (32) ;
et les disques de friction (300, 302) et l'au moins un disque intermédiaire (32), qui sont associés à un côté du côté d'entrée et du côté de sortie, pouvant être serrés à l'encontre de la force de rappel élastique d'un agencement de ressort pneumatique agissant au moins entre l'au moins un disque de pression et le disque intermédiaire, entre deux disques de pression déplaçables dans la direction de l'axe de rotation et/ou entre un disque de pression (30) déplaçable dans la direction de l'axe de rotation et le disque de butée essentiellement stationnaire axialement (22), qui sont associés à l'autre côté du côté d'entrée et du côté de sortie ;
et des éléments de ressort (72, 74) de l'agencement de ressort pneumatique comprenant des ressorts de compression à boudin (72, 74) ou des portions de ressorts de compression à boudin s'étendant dans la direction axiale entre des disques adjacents, lesquels sont maintenus immobiles dans au moins la direction radiale sur une région partielle de leur étendue axiale ;
**caractérisé en ce que**
les ressorts de compression à boudin (72, 74) ou les portions de ressorts de compression à boudin ne sont maintenus immobiles qu'au niveau d'une ou - de préférence - des deux des régions d'extrémité axiales dans lesquelles les enroulements des ressorts de compression à boudin s'appliquent en bloc les uns contre les autres et/ou ne font pas ressort.

2. Embrayage à friction à disques multiples selon la revendication 1, **caractérisé en ce que** les ressorts de compression à boudin (72, 74) ou des portions de ressorts de compression à boudin ne sont maintenus immobiles qu'au niveau d'une ou - de préférence - des deux régions d'extrémité axiales dans la direction radiale ainsi que dans la direction périphérique.

3. Embrayage à friction à disques multiples selon la revendication 1 ou 2, **caractérisé en ce que** les enroulements d'extrémité de chaque ressort de compression à boudin (72 ; 74) ou d'une portion respective de ressort de compression à boudin s'appliquant en bloc les uns contre les autres et/ou ne faisant pas ressort viennent en prise dans un renfoncement de guidage (76) d'un disque associé réalisé de préférence sous forme d'alésage (76).

4. Embrayage à friction à disques multiples selon la revendication 3, **caractérisé en ce qu'**au moins l'un des renfoncements de guidage (76) est réalisé avec un biseau d'insertion (77) actif dans la direction radiale et/ou dans la direction périphérique.

5. Embrayage à friction à disques multiples selon l'une quelconque des revendications 1 à 4, **caractérisé en ce qu'**au moins l'un des éléments de ressort (72, 74) est fixé axialement sur au moins l'un des disques.

6. Embrayage à friction à disques multiples selon la revendication 5 en rapport avec au moins la revendication 3, **caractérisé en ce que** les enroulements d'extrémité sont maintenus axialement à l'intérieur du renfoncement de guidage associé (76).

7. Embrayage à friction à disques multiples selon la revendication 5 ou 6, **caractérisé en ce que** l'élément de ressort (72, 74) est fixé au disque concerné (22 ; 30) par engagement par coopération de forme ou par engagement par liaison de matière sur la plaque.

8. Embrayage à friction à disques multiples selon l'une quelconque des revendications 5 à 7, **caractérisé en ce que** l'élément de ressort (72, 74) est fixé par rivetage sur le disque concerné (22 ; 30).

9. Embrayage à friction à disques multiples selon l'une quelconque des revendications 1 à 8, **caractérisé en ce qu'**au moins l'un (32) des disques est muni sur ses deux côtés axiaux d'éléments de ressort (72, 74).

10. Embrayage à friction à disques multiples selon l'une quelconque des revendications 1 à 9, **caractérisé en ce qu'**au moins un disque intermédiaire (32) des disques est muni d'éléments de ressort (72, 74).

11. Embrayage à friction à disques multiples selon l'une quelconque des revendications 1 à 10, **caractérisé en ce que** des saillies d'entraînement en rotation saillant radialement du disque respectif sont munies d'éléments de ressort.

12. Embrayage à friction à disques multiples selon l'une quelconque des revendications 1 à 11, **caractérisé en ce que** les ressorts de compression à boudin (72, 74) ou des portions de ressorts de compression à boudin sont disposés radialement davantage vers l'extérieur par rapport à un rayon extérieur des disques de friction (300, 302).

13. Embrayage à friction à disques multiples selon l'une quelconque des revendications 1 à 12, **caractérisé en ce qu'**il est réalisé sous forme d'embrayage à sec et/ou **en ce que** les disques de friction présentent des garnitures de friction.

14. Chaîne d'entraînement d'un véhicule automobile, comprenant un embrayage à friction à disques multiples (10) selon l'une quelconque des revendications 1 à 13, entre une unité d'entraînement et une transmission.
